(19) Europäisches Patentamt
European Patent Office
Office européen des brevets

(11) **EP 4 678 264 A2**

(12) **EUROPEAN PATENT APPLICATION**

(43) Date of publication:
**14.01.2026 Bulletin 2026/03**

(51) International Patent Classification (IPC):
***B01D 35/12*** (2006.01)

(21) Application number: **25217008.9**

(22) Date of filing: **08.09.2023**

(52) Cooperative Patent Classification (CPC):
**B01D 29/54; B01D 29/15; B01D 29/23;**
**B01D 29/66; B01D 29/668; B01D 35/12;**
B01D 2201/0453

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **13.09.2022 MY PI2022004986**

(62) Document number(s) of the earlier application(s) in
accordance with Art. 76 EPC:
**23772932.2 / 4 587 149**

(71) Applicant: **D&P Innovations Sdn. Bhd**
**50450 Kuala Lumpur (MY)**

(72) Inventors:
• **GOO, Dat Suan**
**50450 Kuala Lumpur (MY)**
• **DOUCET, Ky**
**50450 Kuala Lumpur (MY)**
• **SINKER, Alastair**
**SO21 2LE Winchester (GB)**

(74) Representative: **Cleveland Scott York**
**5 Norwich Street**
**London EC4A 1DR (GB)**
Remarks:
This application was filed on 19.11.2025 as a
divisional application to the application mentioned
under INID code 62.

(54) **FILTER CARTRIDGE**

(57) A filter for mounting within a high-pressure filtration vessel such that a fluid stream passing through the vessel does so via the filter, the filter comprising: a plurality of elongate filter elements, wherein each filter element is generally cylindrical and comprises: a filter screen; and a support structure, wherein a burst or collapse failure differential pressure Pf of a filter element is

$$P_F = 2.Y_p.K\left[\frac{\left(D_F/t\right)-1}{\left(D_F/t\right)^2}\right]$$

defined by: whereby: Yp is the minimum yield stress of the filter element; K is the derating factor of the filter element; t is the characteristic thickness of the filter element; and Df is the diameter of the filter element, wherein Yp, K, t and Df are selected to provide a Pf of between 1000 PSI and 2000 PSI.

FIG. 1

EP 4 678 264 A2

## Description

This invention relates to a filter cartridge. In particular, this invention relates to a filter cartridge for a high-pressure filtration vessel.

Background of the Invention

In the upstream oil and gas industry, hydrocarbons are recovered from reservoirs which may be located deep underground; sometimes many hundreds or thousands of feet below the ground or below sea level. The recovery and production of hydrocarbon gas and crude oil fluids may be accompanied by the production of water and solid particles. The solid particles found within the recovered fluids may be a natural result of these particles seeping into the fluid stream from the formation surrounding the reservoir. These particles may also be inadvertently introduced into the fluid stream as a result of rock failure; these failures are typically caused by mechanical stresses induced in the rock by the completion of a well structure, for example, by drilling the mechanical framework of the well structure into place or by performing well maintenance operations. Rock failure may also occur naturally over time resulting in additional unwanted solid particles entering the fluid stream. Other solids can be introduced to the reservoir through drilling and well service operations which can start to be produced to surface once the well starts flowing. These solid particles are generally termed 'sand'; the production and removal of sand is a major challenge for the hydrocarbons industry for completing and producing oil and gas wells.

For high pressure applications, up to about 20 KPSI, MultiPhase Desanding (MPD) systems are typically used to remove the sand, and other solid particles, from the raw, recovered MultiPhase well fluids; these systems provide protection for equipment and processes carried out downstream of these wells. In many cases, MPD systems are located upstream of the main well flow control element (known as a choke valve); solids found within the fluid stream could cause erosion and/or blockages of the choke and downstream processing equipment, and as such, the systems implemented upstream of the choke prevent these potential damaging and production limiting problems.

A typical MPD system used to remove solid particles is a sand filter unit. A sand filter unit typically consists of a pair of elongate filtration vessels, each housing a cylindrical filter screen within whereby, the recovered fluid or 'production flow' that passes through the vessel does so via the cylindrical filter screen. There are two main flow routes utilised for the production flow passing through the filter screen. The first routing method is 'Flow In to Out' (hereinafter referred to as 'FITO'). FITO is the most common flow routing. Here, the production flow is routed within the centre of the cylindrical screen. The gas and liquid phases pass across the screen, outwardly and exit the vessel via a nozzle mounted in the vessel side wall, while the solids are held and build up as a "filter cake" on the inside of the cylindrical filter screen.

The second routing method is 'Flow Out to In' (hereinafter referred to as 'FOTI'). Here, the production flow is routed in the opposite direction to the FITO method - from the side of the vessel, outside the cylindrical screen. The gas and liquid phases pass across the screen, to within the centre of the screen, and then exit the vessel via the centre of the screen. The solids are held and build up as a "filter cake" on the outside of the cylindrical filter screen. In this case, the passing of the production flow through the sand filter separates the sand particles from the production flow and traps them within the internal filter. As the trapped sand builds up on the filter, known as the filter "cake", so too does the pressure induced on the filter by the production fluid trying to pass through the filtered sand cake.

Once the pressure drop across the sand filter reaches a pre-determined maximum value, the production flow is switched from the first vessel to the second vessel; these vessels are typically denoted as duty and standby vessels respectively. The former duty vessel is then isolated, depressurised and purged of the built up filtered sand, typically using water to backflush the sand to a solids disposal point. These procedural steps are repeated again by the standby vessel once the production flow is reverted back to the original duty vessel, in the same way as delineated above, and the cycle begins again. Designs of filter screens range from perforated steel to wire mesh arrangements (to give two common examples), and these designs come in a range of different pore sizes.

There are operational limitations using conventional high-pressure sand filters in upstream well testing and/or frac flowback applications. Most conventional sand filter screens are typically designed for the FITO method, whereby the filter cake builds up on the inside of the filter screen. A problem with this arrangement is that there is limited volume for the filtered solids cake to build and the filter can "blind" very quickly, resulting in a rapid rise in pressure drop across the filter. This limited solids hold up volume can cause intense high purging frequencies during operating periods where the solids production rates are high, and can be overwhelmed in the event of a significant solids slug.

The filter element typically comprises a filter screen and an internal support structure (consisting of either an axial and/or radial support rods welded directly to the filter aperture creation element of the screen, or a separate structure such as a slotted pipe or other fabricated assembly which is secured to the filter screen), and is designed to be as strong as possible to resist a high-pressure drop, which would occur before structural failure of the element. When designing the filter, there is a trade-off between the 'active flow area' of the filter, which is defined as the area of the filter screen through which flow passes; and the 'non flow area' of the filter, which is defined as the potential flow area that is compromised, or blocked, by the support structure for the screen given that the screen overlays the support structure.

The higher the designed failure pressure of the filter, the lower the active flow area available, as a greater amount of screen support structure is required. Therefore, increasing the design failure pressure of the filter reduces the active flow area, which in turn reduces the available filter cake volume, causing a more rapid rise in the pressure drop for a given solids production rate.

The FITO designs can be particularly vulnerable to failure in applications where the sand rates are high because the critical sand concentration, whereby the rise in pressure drop is so rapid that the operators cannot react quickly enough to switch over to the standby filter vessel before the critical burst pressure has been reached, will be lower than that of a FOTI design due to a lower filter cake accommodation volume. Further, it is typically more difficult to design a screen to resist "bursting" (in to out) than "collapsing" (out to in) and the former will require more sub structure than the latter to resist a given pressure drop.

The filter screens undergo very demanding operational conditions in high pressure well testing and frac flowback applications. Typical burst/collapse pressures range from 750 to 1,000 pounds per square inch (PSI). Over this pressure range, downtime penalties of vessels and spares/equipment costs associated with screen failures, caused by solids slugs and other unpredictable abnormal well flow scenarios, is relatively high.

As described above, once a filter vessel is taken offline and isolated from the production, it needs to be cleaned by backflushing flush water through the screen in the reverse direction to the production flow direction to knock off the built-up solids filter cake on the inlet side of the filter screen. A constant operational issue is that some parts of the filter cake are more difficult to remove from the screen than other parts, and once a portion of the screen has been cleared, most of the flush water then channels through the cleared section of the screen, reducing the pressure drop across the entire screen, typically leaving the more adhered sections of the filter cake in place.

The present invention aims to overcome or at least ameliorate one or more of the problems set out above.

Summary of the Invention

In one aspect of the present invention, there is provided a filter for mounting within a high-pressure filtration vessel such that a fluid stream passing through the vessel does so via the filter, the filter comprising: a plurality of elongate filter elements, wherein each filter element is generally cylindrical and comprises: a filter screen; and a support structure, wherein a burst or collapse failure differential pressure Pf of a filter element is

$$P_F = 2 . Y_p . K \left[ \frac{\left( D_F/t \right) - 1}{\left( D_F/t \right)^2} \right]$$

defined by: whereby: Yp is the minimum yield stress of the filter element; K is the derating factor of the filter element; t is the characteristic thickness of the filter element; and Df is the diameter of the filter element, wherein Yp, K, t and Df are selected to provide a Pf of between 1000 PSI and 2000 PSI.

In this way, a filter with an overall increased active flow area (relative to a single conventional filter element) with significantly increased maximum burst/collapse pressure of each filter element of the filter is provided. Further, given the filter has more than one filter element, when a filter element is damaged, only the damaged filter element is required to be replaced, rather than the entire filter, which saves cost.

Preferably, Yp, K, t and Df are selected to provide a Pf of between 1500 PSI and 2000 PSI. In some arrangements, Yp is around 65 KPSI; K is between 0.45 and 0.6; and t is between 2 mm and 4 mm. In preferable arrangements, K is 0.5; and t is 2.5 mm. Preferably, Df is between 25 mm and 100 mm. Preferably, Df is 60 mm.

Preferably, the filter elements are arranged to be radially symmetrical. In this way, volume for filter cake (i.e., filtered debris) thickness throughout the total surface area provided by the filter elements is maximised and distributed evenly across the filter.

Preferably, the filter elements are fixed relative to one another.

Preferably, the filter elements are mounted within a cartridge structure, the cartridge structure being arranged to be received by and within the filtration vessel. This generally facilitates insertion of the filter elements within the vessel.

Preferably, each filter element is removably attached to the cartridge structure. In this way, individual filter elements can be easily removed and replaced, such as in the event a filter element bursting or collapsing.

In a further aspect of the present invention, there is provided a filtration vessel comprising the filter.

In a further aspect of the present invention, there is provided a method of cleaning a high-pressure filtration vessel comprising a filter, whereby the filter is mounted within the vessel such that a fluid stream passing through the vessel for filtration does so via the filter, the filter having a plurality of filter elements, the method comprising the steps of: a) sealing the outlet of at least some of the filter elements b) flushing the unsealed filter elements with a flushing fluid c) repeating steps a) and b) for each other filter elements that have not been flushed until each filter element has been flushed with flushing fluid at least once.

Cleaning a filter comprising a plurality of filter elements using the above described method is advantageous (relative to cleaning a single conventional larger filter element) because, for a given flush water flowrate, the average flush water velocity through the filter is increased. This increases the cleaning efficiency of each filter element, and thus the filter as a whole.

Preferably, in step a) the outlets of all filter elements except one filter element is sealed; and, in step c), the steps a) and b) are repeated for each other filter element that has not been flushed until each filter element has been separately flushed with flushing fluid.

Preferably, the flushing fluid is different to the fluid stream passing through the vessel for filtration.

Preferably, the flushing fluid is water.

In a further aspect of the present invention, there is provided a valve arrangement for controlling the flow of a fluid stream to within the filter elements of a filter, the valve arrangement comprising: sealing means for sealing the outlet of at least one filter element against a flow of fluid entering said filter element via said outlet; and selecting means arranged to actuate the sealing means to select which outlet(s) of the filter elements are sealed by the sealing means.

Cleaning a filter comprising a plurality of filter elements using the valve arrangement is advantageous (relative to cleaning a single conventional larger filter element) because, for a given flush water flowrate, the average flush water velocity through the filter is increased. This increases the cleaning efficiency of each filter element, and thus the filter as a whole.

Preferably, the sealing means is further arranged to seal less than the total number of outlets of the filter elements.

Preferably, the sealing means is arranged to seal all of the outlets of the filter elements except for the outlet of one filter element.

Preferably, the selecting means comprises a movable element that is arranged to move the sealing means to select which outlet(s) of the filter element(s) are sealed.

Preferably, the sealing means is a plurality of balls retained with a rotatable housing such that each ball is retained proximate to the outlet of a filter element to seal the outlet from a flow of fluid into the filter element via the outlet, the number of balls being less than the number of outlets of the filter elements such that at least one outlet of a filter element is always unsealed; and wherein the selecting means is a rotatable shaft arranged to engage the housing such that rotation of the shaft causes rotation of the housing, whereby rotation of the housing causes the balls to move laterally to seal the outlets of adjacent filter elements.

Preferably, the sealing means is a rotatable disc having an aperture that axially coincides with the output of a filter element; and wherein the selecting means is a rotatable shaft arranged to engage the disc such that rotation of the shaft causes rotation of the disc, whereby rotation of the disc causes the aperture to move laterally to coincide with the output of an adjacent filter element.

In a further aspect of the present invention, there is provided a valve arrangement for controlling the flow of a fluid stream to outside the filter elements of a filter, the valve arrangement comprising: sealing means for sealing the outlet of at least one filter element against a flow of fluid exiting said filter element via said outlet; and selecting means arranged to actuate the sealing means to select which outlet(s) of the filter elements are sealed by the sealing means.

Preferably, the sealing means is a rotatable disc having an aperture that axially coincides with the output of a filter element; and wherein the selecting means is a rotatable shaft arranged to engage the disc such that rotation of the shaft causes rotation of the disc, whereby rotation of the disc causes the aperture to move laterally to coincide with the output of an adjacent filter element.

## Brief Description of the Drawings

Embodiments of the invention will now be described by way of example, with reference to the drawings in which:-

Figure 1 is a front cross-sectional view of a filtration vessel.

Figure 2 is a perspective view of a filter.

Figure 3 is an exploded view of the filter of Figure 2.

Figure 4 is a cut-away view of a filter element.

Figure 5a is a front cross-sectional view of a filtration vessel showing the 'Flow Out to In' flow path, and Figure 5b is a front cross-sectional view of a filtration vessel showing the 'Flow In to Out' flow path.

Figure 6a is a front cross-sectional view of a filtration vessel showing the 'Flow Out to In' flow path when being flushed in a reverse direction of the FOTI flow path, and

Figure 6b is a front cross-sectional view of a filtration vessel showing the 'Flow In to Out' flow path when being flushed in a reverse direction of the FITO flow path.

Figure 7 is a front cross-sectional view of an external actuator assembly.

Figure 8 is a front cross-sectional view of the sealing balls of the valve assembly.

Figure 9 is a top cross-sectional view of the sealing rotatable housing of the valve assembly.

Figure 10a is a front cross-sectional view of a filter having a valve assembly for the FOTI flow path for flushing in a reverse direction of the FOTI flow path, and shows a cross-sectional view along the line AA.

Figure 10b is a front cross-sectional view of a filter having a valve assembly for the FITO flow path for flushing in a reverse direction of the FITO flow path, and shows a cross-sectional view along the line BB.

## Detailed Description

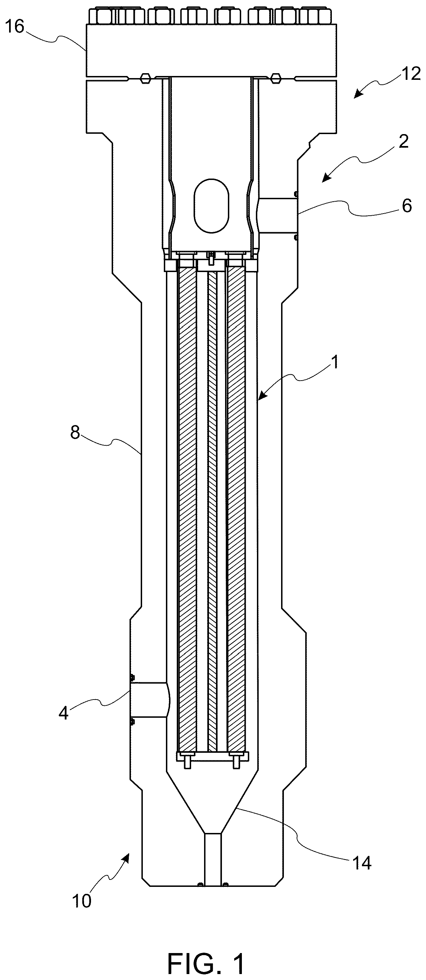

In Figure 1, a filter in accordance with the present invention is shown as item 1. In Figure 1, the filter 1 is mounted within a filtration vessel 2. The filtration vessel 2 is of the conventional type for high-pressure desanding of a production flow recovered from a hydrocarbon reservoir. The vessel 2 is generally cylindrical and comprises a vessel inlet 4 in a side wall 8 of the vessel 2, and a vessel outlet 6. The vessel inlet 4 is axially below the vessel outlet 6. More specifically, in this embodiment, the vessel inlet 4 is proximate to a bottom end 10 of the vessel 2, and the vessel outlet 6 is proximate to a top end 12 of the vessel 2. As will be described later on, the vessel inlet 4 and vessel outlet 6 allow the vessel to be fluidly connected to a production flow such that fluid may flow between the vessel inlet 4 and vessel outlet 6.

The vessel 2 comprises a diametric bore 14 (i.e., a bore having its longitudinal axis extend along a central axis of the vessel) that is generally cylindrical in shape. The bore 14 is configured to receive the filter 1 therein via a lid 16, which seals the bore 14 once the filter 1 is mounted within the vessel 2. When the filter 1 is mounted/installed within the bore, the vessel inlet 4 is sealed from the vessel outlet 6 via the filter 1. In other words, fluid is forced to flow from the vessel inlet 4 to the vessel outlet 6 via the filter 1.

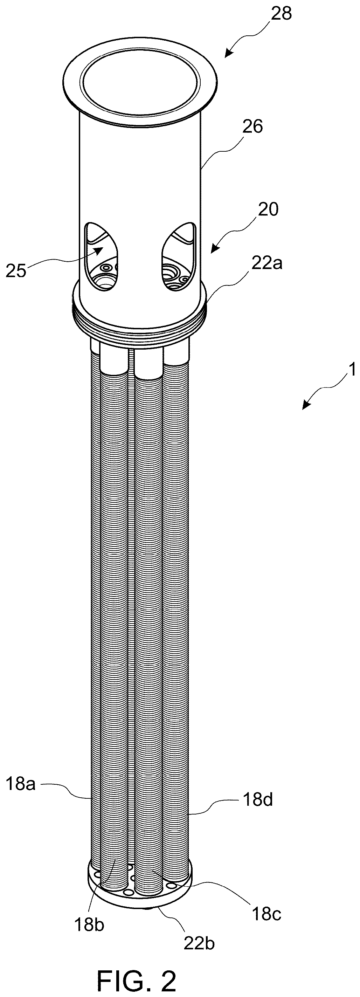

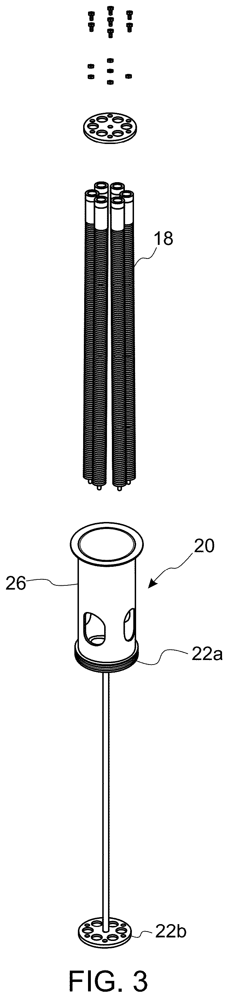

As illustrated in Figures 2 and 3, the filter 1 comprises six elongate filter elements (only four of which are clearly visible in Figure 2 - filter elements 18a, 18b, 18c, 18d) that are mounted within a cartridge element 20. The cartridge element 20 comprises a pair of transversely opposed cylindrical mounting plates: an inner mounting plate 22a and an outer mounting plate 22b. The mounting plates 22a, 22b are connected together via rods (not shown). Top ends of the filter elements are connected to the inner mounting plate 22a and bottom ends of the filter elements are connected to the outer mounting 22b. The filter elements are thus fixed relative to each other, and relative to the cartridge element 20. The mounting plates 22a, 22b comprise apertures for receiving the filter elements such that the internal channels of each filter element is not block/obstructed when the filter elements are mounted to the mounting plates 22a, 22b (i.e., fluid can pass within each filter element, between the top and bottom of the filter element).

Each filter element is removably attached to the mounting plates 22a, 22b. In this way, individual filter elements can be easily removed and replaced, such as in the event a filter element bursting or collapsing.

The inner mounting plate 22a is mounted to the inside surface of a cylindrical shell 26, which encircles the inner mounting plate 22a and extends axially, away from the filter elements.. The shell 26 (and filter 1) is sized and shaped such that it can be inserted (and fit) into the bore 14 of the filtration vessel. The lid 16 of the vessel 2 is sized to accommodate the top portion 28 of the filter 1 when the filter 1 is inserted into the bore 14 such that the filter can be sealed within the vessel 2 when the lid is fixedly closed. The lid 16 also secures the filter 1 axially and prevents the cartridge element 20 (and thus the filter elements) from moving (i.e., upwards or downwards) as a result of forces imposed by pressure drops across the filter elements which may occur during either production or backflush operating modes (which are described later on). In this regard, the shell 26 facilitates the transfer loads imparted by the pressure drops across the filter elements from the filter elements to the lid 16.

The cartridge element 20 provides a structural platform to fix and align the filter elements relative to one another, and generally facilitates insertion of the filter elements within the vessel 2. In some embodiments, there may be no cartridge element 20 and the filter elements may be mounted directly within the vessel 2.

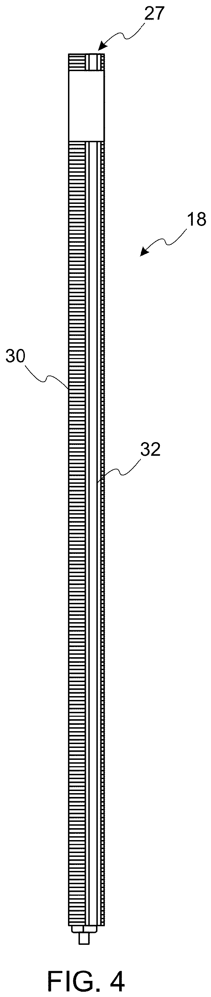

Figure 4 illustrates a single filter element 18. The filter element 18 is generally cylindrical in shape and has a hollow centre which demarcates a central channel between a top end and a bottom end of the filter element. A top end of the filter element 18 thus defines a top opening or outlet 27 of the filter element (and thus of the central channel). The shell 26 comprises openings 25 at a region above, but proximate to, the inner mounting plate 22a. In this way, fluid passing through the outlets of the filter elements may pass through the openings 25 in the shell 26 (and vice versa), and ultimately the vessel outlet 6 of the vessel 2.

The filter element 18 comprises a filter screen 30 and a support structure 32. In this embodiment, the filter screen 30 is arranged as a 'Flow Out To In' (herein after denoted as FOTI) filter screen. This means the filter screen is arranged to facilitate flow from outside the screen to within the screen. The filter element in this embodiment thus comprises an outer filter screen 30 and an internal support structure 32, the inside of which demarcates the central channel. The filter screen 30 and support structure 32 are both generally cylindrical in shape, the filter screen 30 encircling (and coaxial with) the support structure 32. The diameter of the support structure in this case is slightly less than or approximates that of the filter screen.

In other embodiments, the filter screen 30 is arranged as a 'Flow In To Out' (herein after denoted as FITO) filter screen. This means the filter screen is arranged to facilitate flow from inside the screen to outside the screen. The filter element in these embodiments thus comprises an inner filter screen and an outer support structure. The diameter of the support structure in this case is slightly more than or approximates that of the filter screen.

In any case, the filter screen and support structure both comprise holes along large portions of their length. The holes of the filter screen and the support structure are generally axially aligned. In this way, fluid can flow between the filter screen and the support structure. Returning to the embodiment of Figure 4, fluid can thus flow between outside the filter screen 30 to within the central channel (i.e., within the support structure 32). The diameter of the support structure in any case approximates that of the filter screen. In some cases, the support structure is integral with the filter screen. In these cases, the diameter of the filter screen is the same as the support structure.

Returning to Figure 3, the filter elements are arranged in a circular arrangement, and generally parallel to each other. More specifically, the filter elements are arranged such that a central axis of each filter element share a common circular axis. Even more specifically, filter elements are radially symmetrical. In this way, volume for filter cake (i.e., filtered debris) thickness throughout the total surface area provided by the filter elements is maximised and distributed evenly across the filter 1. In other embodiments, the filter elements may not be radially symmetrical and/or not share a common circular axis.

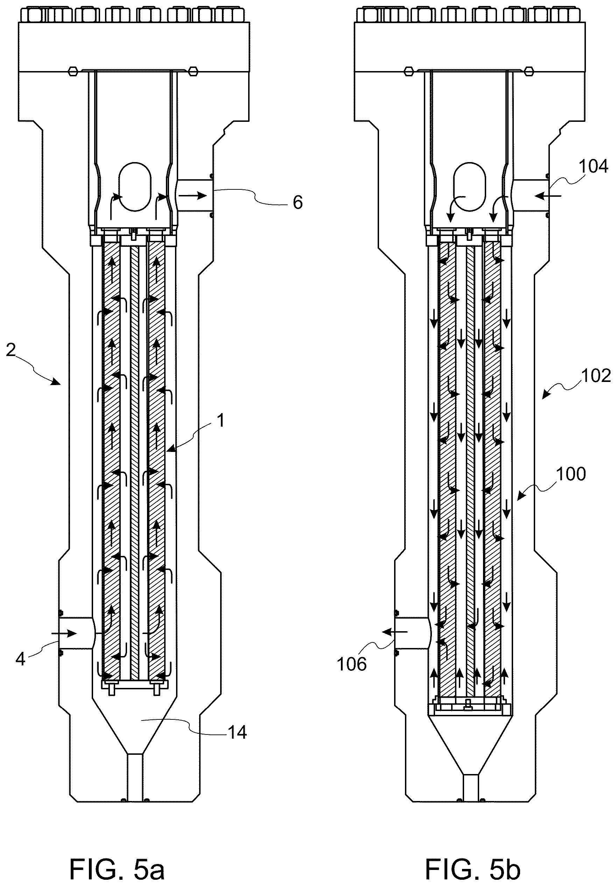

A flow of a fluid stream through the vessel with the filter 1 mounted within the vessel 2 will now be described with reference to Figure 5a. The vessel 2 illustrated in Figure 5a is fluidly connected to a fluid stream. Fluid enters the vessel 2 via the vessel inlet 4 and flows towards the bore 14, and thus towards the filter 1. The fluid passes across the filter screens of the filter elements, to within the central channels of each filter element (via the internal structures of each filter element). The solids in the fluid stream are held and build up as a "filter cake" on the outside of the filter screens of the filter elements - the passing of the fluid stream through the filter 1 separates the solids from the fluid stream and traps them within the filter. The bottom ends of the filter elements are sealed externally (such as via an isolation valve). The fluid thus flows upwardly, through the central channels, towards to the outlets at the top ends of each filter element, before ultimately exiting the vessel via the vessel outlet 6. This is a FOTI methodology of fluid flow.

Figure 5b illustrates a flow of a fluid stream through the vessel but using a FITO methodology. In this embodiment, the filter screen is thus arranged as a FITO filter screen (i.e., comprises an inner filter screen and an outer support structure). The vessel inlet and the vessel outlet of the embodiment of Figure 5a are now deemed a vessel outlet 106 and vessel inlet 104 respectively. Fluid enters the vessel 102 via the vessel inlet 104 and flows towards a top end of the filter 100. The fluid then flows down the central channels of the filter elements, across the inside of the filter screens (via the internal structures of each filter element) to outside the filter screens. The solids in the fluid stream are held and build up as a "filter cake" on the inside of the filter screens of the filter elements - the passing of the fluid stream through the filter 100 separates the solids from the fluid stream and traps them within the filter. The fluid then flows downwardly, ultimately exiting the vessel 102 via the vessel outlet 106. The bottom ends of the filter elements are also sealed in this case (such as via an external isolation valve).

In both flow methodologies (i.e., FOTI and FITO), as the trapped sand builds up on the filter screens, so too does the pressure induced on the filter screens by the fluid stream trying to pass through the filtered sand 'cake'. Once, the pressure drop across the filter screen reaches a pre-determined maximum value, the fluid stream must be switched to another vessel to allow the initially used vessel to be backflushed - the process of removing the sand 'cake' from the filter. In this regard, the arrangement of the filter of the present invention provides several benefits relative to a conventional filter, which is typically a single, relatively large filter screen with an internal or external support structure - typically 150 mm in diameter.

Each filter screen (and thus each filter element) of the present invention comprises a relatively small diameter of 60 mm. Relative to the conventional 150 mm diameter filter screens, for a given filter length, the total surface area of filter screen provided by the filter is increased by a factor of 2.4 (if the filter comprises six filter elements). This means the pressure drop for a given flowrate and filter cake thickness is lower, resulting in a longer operational cycle time of the vessel between backwash procedures, which is desirable.

Further, the relatively smaller diameter of the filter screen has an increased critical collapse pressure (relative to the large conventional filter screen). This results in the filter screen having a much greater resistance to collapse/burst failure and thus reduces the amount of structural support material required to provide a given collapse pressure. This in turn also increases the active flow area percentage of the filter screen of the filter element.

To demonstrate this, the flow area Af by which flow passes through each filter element is:

$$A_F = \pi D_F H \qquad \text{Eq 1.1}$$

whereby Df is the characteristic diameter of the filter element and H is the characteristic height of the filter element flow section.

The total flow area Av which passes through the filter (i.e., through all of the filter elements of the filter) installed in the filter vessel is:

$$A_V = N_F \pi D_F H \qquad \text{Eq 1.2}$$

whereby Nf is the number filter elements of the filter.

A burst (i.e., for FITO) or collapse (i.e., for FOTI) failure differential pressure Pf of a filter element is defined by a form of Barlow's formula:

$$P_F = 2.Y_p.K \left[ \frac{\left( D_F/t \right) - 1}{\left( D_F/t \right)^2} \right] \qquad \text{Eq 1.3}$$

whereby Yp is the minimum yield stress of the filter element; K is the derating factor of the filter element; t is the characteristic thickness of the filter element; and Df is the diameter of the filter element.

The filter screen and support structure comprise an alloy stainless steel material, such as 304, 316L, 22% Cr Duplex and 25% Cr Super Duplex. Yp is thus typically 65 ksi for 22% Cr Duplex. Preferably, Yp is typically between 25 ksi to 80 ksi across the above mentioned stainless steel range.

K is typically between 0.45 and 0.65. Preferably, K is 0.5. t is typically between 2 mm and 4mm. Preferably, t is 2.5 mm.

A conventional filter typically comprises a Df of approximately 6 inches, which is approximately 152 mm. Thus, using equation 1.3, when Yp is 65 KPSI, K is 0.5 and t is 2.5 mm, Pf is 1065 PSI. If Df is halved and the other variables are kept the same, Pf becomes 2095 PSI. This is an increase of burst/collapse differential pressure by a factor of over 1.9. This illustrates the effect that the filter element diameter has on the ultimate burst/collapse failure pressure of the filter.

In embodiments of the invention, wherein Yp, K, t and Df are selected to provide a Pf of between 1000 PSI and 2000 PSI, more preferably between 1100 PSI to 2000 PSI, even more preferably, 1500 PSI to 2000 PSI. Preferably, the diameter of the filter elements are 60 mm, and Yp, K, t are selected to provide a collapse/burst pressure of each filter element of the filter 1 between 1000 PSI to 2000 PSI, more preferably between 1100 PSI and 2000 PSI, even more preferably, 1500 PSI and 2000 PSI.

In other embodiments, the diameter of each filter element is between 25mm and 100mm.

Further, for given filter vessel bore Dv, the following general trends occur. When Df/Dv is reduced over the range 1 > Df/Dv > 0.5 (while other factors remain constant): the number of filter elements (Nf) than can be accommodated inside the filter vessel cannot exceed 1 (if the filter element is to remain generally cylindrical in cross section); the total flow area of the filter element (Nf.Af) reduces linearly (as Nf = 1); the burst / collapse differential pressure of the filter element diameter will increase generally in accordance with Eq 1.3; for FOTI filter elements, the percentage of the volume within the Filter vessel available to accommodate filter cake increases; and for FITO filter elements, the percentage of the volume within the filter vessel available to accommodate the filter cake decreases.

When Df/Dv is reduced over the range 0.5 >= Df/Dv >= 0.01 (while other factors remain constant): the number of filter elements (Nf) that can be accommodated within the filter vessel increases in non-linear integer increments; the flow area (Af) of each filter element decreases but the total flow area (Nf.Af) of the complement of filter elements generally increases in non-linear integer increments in line with the stepped increase in Nf; the burst / collapse differential pressure of the filter element diameter will increase generally in accordance with Eq 1.3; for FOTI filter elements, the percentage of the volume within the filter vessel available to accommodate the filter cake increases and decreases in non-linear integer increments in line with the stepped increase in Nf; for FITO filter elements, the percentage of the volume within the filter vessel available to accommodate the filter cake increases and decreases in non-linear integer increments in line with the stepped increase in Nf.

When selecting the optimal Df/Dv range, the following factors are also relevant for consideration: As Nf increases, for FOTI designs, the back flush flow path for the filter cake solids to flow from a point on a Candle Filter surface to the backflush exit point in the filter vessel becomes increasingly tortuous increasing the risk of less efficient backflushing performance; as Nf increases, the diameter of the filter element decreases (for a given filter vessel bore) which implies that for FITO filter elements, the risk of solids blockage due to particle bridging mechanisms increases, increasing the risk of less efficient backflushing performance; as Nf increases, the cost and mechanical complexity of the filter construction increases; as Nf increases, the number of internal seals increases which will increase chance of a single internal seal failure.

Thus, all filter designs in the range of 0.5 >= Df/Dv >= 0.01 will provide an increased flow area Af and an increased burst / collapse differential pressure, for the high pressure filters used in the oil and gas industry, filter designs within the range of 0.35 >= Df/Dv >= 0.15 provide an optimised compromise between enhanced flow area Af and increased burst / collapse differential pressure Pf, while not significantly impacting filter cake accommodation volume, back flushing efficiency, mechanical complexity and cost.

A filter 1 comprising a plurality of filter elements is advantageous (relative to the single conventional larger filter element) because if a filter element (or more specifically a filter screen) is damaged (such as due to a high velocity solids impact), given the filter 1 has more than one filter element, only the damaged filter element is required to be replaced, rather than the entire filter. Further, in some embodiments, one of the filter elements is arranged to collapse or burst at a slightly lower pressure than the other filter elements. In the event of an abnormal operating scenario which may result in a differential pressure spike across the filter elements, the filter element having the lower collapse or burst pressure will fail first, which will provide a low-pressure flow routing across the filter, thus lowering the pressure drop for that given flowrate. The other filter elements are thus mechanically protected and only one of the filter elements is required to be replaced. In this way, a significant cost reduction is achieved (relative to the single conventional larger filter element), as each filter element is much smaller and often only one damaged filter element is required to be replaced.

Providing a plurality of relatively smaller filter elements thus provides a filter with an overall increased active flow area (relative to a single conventional filter element) with significantly increased maximum burst/collapse pressure of each filter element of the filter.

In some embodiments, the filter 1 may comprise more than six filter elements. In other embodiments, the filter 1 may comprise less than six filter elements (but more than one filter element - i.e., at least two filter elements). This will depend on the size of the filter vessel bore, the size of the filter element bore and a desired flow rate area required for the application of the filter. Preferably, the diameters of each filter element of the filter are the same. In other embodiments, the diameters of each filter element may not be the same.

As described above, once the pressure drop across a filter screen reaches a pre-determined maximum value, the fluid stream is switched to another vessel to allow the initial vessel to be backflushed. Backflushing means flushing the vessel with a flow of fluid (typically water) in a opposite direction to that of the 'working' flow direction so as to displace and remove built up solids from the filter screen surface. So, if the working flow of the vessel is of the FOTI flow type, a backflush operation would flush fluid through the vessel in the opposite direction to this - a FITO flow direction. For a FITO flow type, a backflush operation would flush fluid through the vessel in the opposite direction to this - a FOTI flow direction.

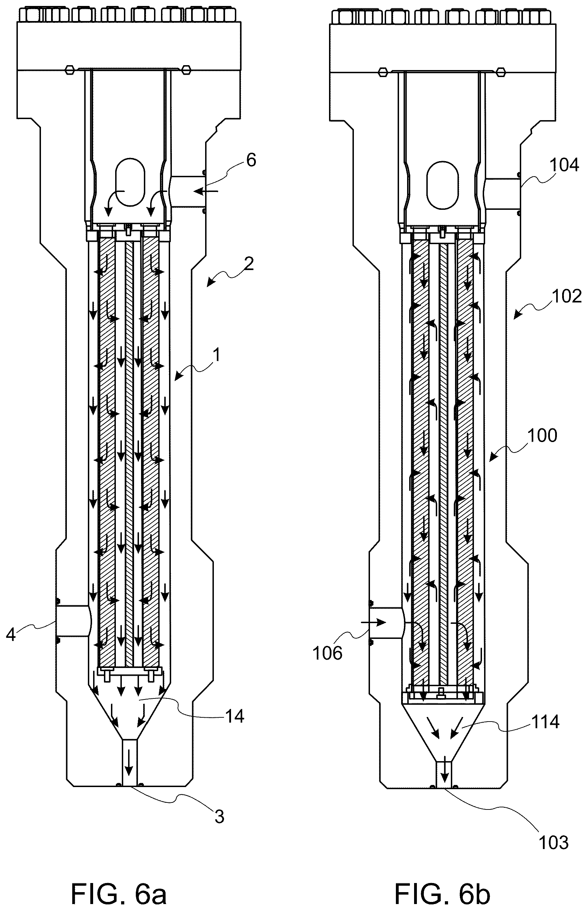

Figure 6a illustrates a backflushing (or cleaning) operation of the vessel 2 of Figure 1, which utilised a FOTI flow direction for filtration (i.e., filter elements comprise an outer filter screen and an inner support structure). In this case, the filter 1 (more specifically a filter screen of one of the filter elements) has reached a pressure drop of a pre-determined value, and so the production flow fluid stream is switched over to a standby vessel (not shown). The vessel 2 is then fluidly connected to a supply of cleaning fluid, which in this embodiment is water. The vessel inlet 4 is closed, and a separate 'backflush' outlet 3 that is connected to the bore 14 is opened. The water enters the vessel 2 via the vessel outlet 6 and flows towards a top end of the filter 1. The water then flows down the central channels of the filter elements, across the inside of the filter screens (via the internal structures of each filter element) to outside the filter screens. As this occurs, solids are displaced from the outside of the filter screens of the filter elements - the passing of the water through the filter 1 purges the solids from the filter. The water then flows downwardly, along with the purged solids, ultimately exiting the vessel 2 via the backflush outlet 3. The bottom ends of the filter elements are sealed to facilitate purging of these elements by the water - this helps to maintain a higher pressure within each filter element as they are flushed with water, as well as directing the flow during filtration towards the vessel outlet 6..

Figure 6b illustrates a backflushing (or cleaning) operation of the vessel 102 using a FITO flow direction for filtration (i.e., filter elements comprise an inner filter screen and an outer support structure). In this embodiment, the vessel inlet 104 is closed a separate 'backflush' outlet 103 that is connected to the bore 114 is opened. Further, the outlets of the filter elements (at their top ends) are now closed, and the bottom ends of the filter elements are no longer sealed. In other words, the bottom ends of the filter elements are now considered outlets for the flow of flush water.

Water enters the vessel 102 via the vessel outlet 106 and flows towards the bore 114, and thus towards the filter 100. The water passes across the filter screens of the filter elements, to within the central channels of each filter element (via the internal structures of each filter element). As this occurs, the solids are displaced from the inside of the filter screens of the filter elements - the passing of the water through the filter 100 purges the solids from the filter. The water then flows downwardly, along with the purged solids, through the central channels, towards to the bottom ends of each filter element, before ultimately exiting the vessel 102 via the backflush outlet 103.

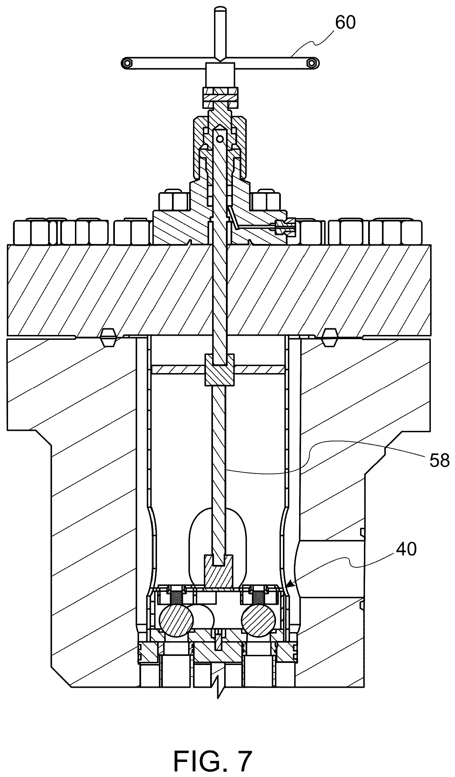

As illustrated in Figure 7, in a further embodiment, to facilitate the above-described cleaning (or backflush) procedure, the filter 1 additionally comprises a valve assembly 40. As will now be described, the valve assembly 40 is arranged to direct the flushing fluid (i.e., water) into a single filter element when fluid is arranged to flow from the valve assembly 40 towards the filter 1 (i.e., an FITO flow direction). In other words, the valve assembly seals (or isolates) all of the filter elements except one filter element during the flushing procedure.

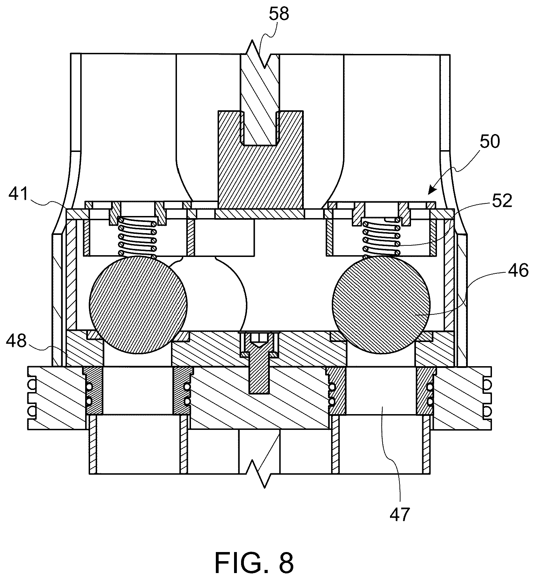

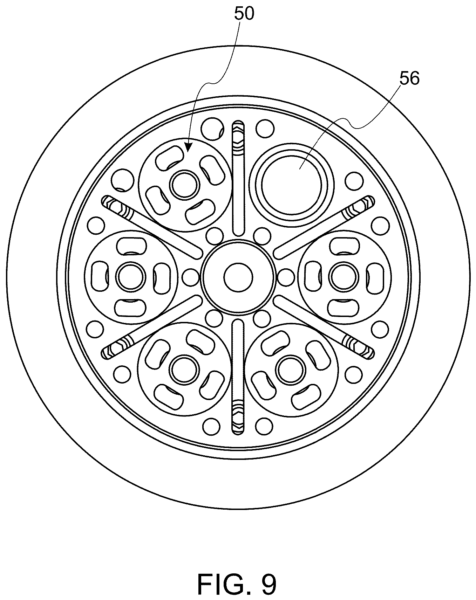

As illustrated in Figures 8 and 9, the valve assembly 40 comprises five sealing balls 46 (only two of which are shown in Figure 8) that are retained within a rotatable housing 41. The rotatable housing 41 is mounted to (and may rotate relative to) a circular plate member 48. The plate member 48 has six apertures 47 arranged in a circular formation - one for each output of each filter element. Each ball 46 sits within an aperture 47 of the plate element 48 and is retained within the rotatable housing via a generally circular ball housing 50 such that the ball 46 has contained movement laterally relative to the ball housing 50. The ball housings are thus radially symmetrical (i.e., their central axes share or are aligned with a common circular axis). Each ball housing is connected to (or is integral with) the rotatable housing 41 such that each ball housing rotates (or moves) with the rotatable housing 41.

The ball housing 50 comprises a spring 52 that is connected between the housing 50 and the ball 46. The spring 52 is biased against the ball 46 such that the spring 52 pushes the ball 46 into the aperture 47. This facilitates retention of the ball 46 within the aperture 47. In some embodiments, there may be no spring provided in the ball housing.

The plate member 48 is mounted to a top surface of the inner mounting plate 22a (not shown in Figure 8) such that each aperture is axially aligned with a central axis of an output of a filter element. In this way, when the ball 46 sits within the aperture 47, the ball 46 prevents a flow of fluid from flowing from the valve assembly 40 into the output of a filter element. The ball is thus arranged to seal the aperture (and thus the output of the filter element) when the ball is retained in the aperture. In this regard, each ball has a diameter that is larger than a diameter of the aperture.

However, the sealing balls do not seal any outputs of the filter elements when the vessel is being used for filtration. This is because for filtration, the direction of the flow of fluid is from the filter elements towards the valve assembly (and thus towards the sealing balls from within the filter elements). The flow of fluid in this case pushes the balls from their respective apertures, allowing fluid to flow through the valve assembly. This is advantageous because the valve assembly allows flow through all filter elements during filtration but directs a flow fluid into one filter element during the cleaning/flushing process (where the direction of the flow of fluid is now opposite to that during the filtration process). A filter 1 comprising this valve assembly 40 is thus suitable for a vessel using the FOTI flow direction for filtration. The arrangement of the sealing balls can thus be considered as a one-way valve sealing arrangement.

The valve assembly 40 is thus configured to seal all of the outlets of the filter elements except one outlet when the direction of the flow of fluid is from the valve assembly towards the filter. In this embodiment, there are six filter elements (and thus six filter element outlets). Therefore, the valve assembly 40 in this embodiment is arranged to seal five filter elements at one time, leaving one filter element not sealed 56 (shown in Figure 9).

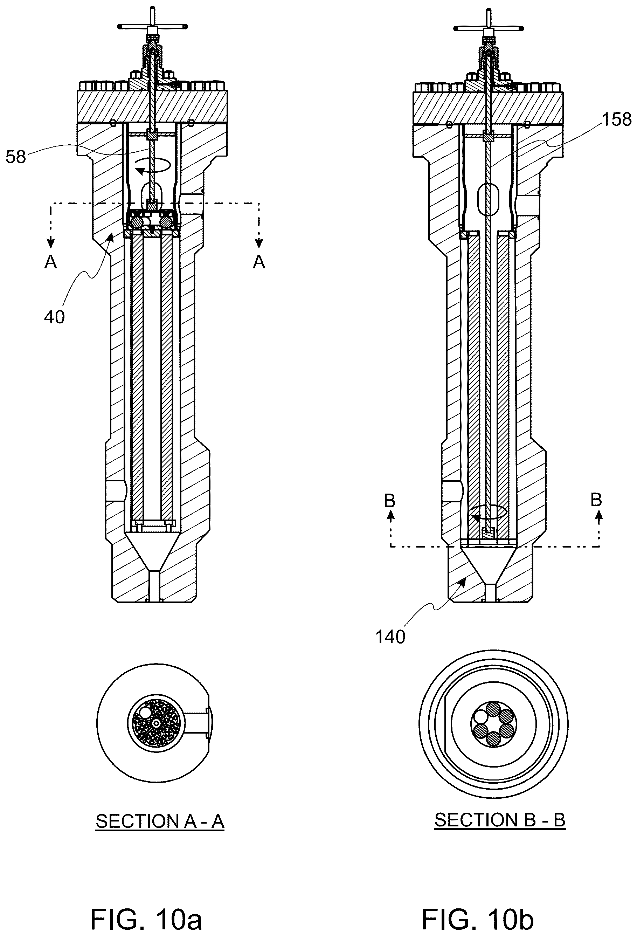

As illustrated in Figure 10a, the rotatable housing 41 is arranged to be rotated by a shaft 58 that is connected at its lower end to a central top surface of the rotatable housing 41. The shaft 58 is axially aligned with a central axis of the rotatable housing 41 and fixed relative to the rotatable housing 41. The shaft 58 passes through an aperture in the lid 16 of the vessel 2 and engages, at its top end, with a circular handle 60. The handle 60 can thus be rotated (such as manually by a user) to rotate the rotatable housing 41 via the shaft. In this embodiment, the shaft 58 comprises and an upper shaft and a lower shaft. The upper shaft engages a hub that is fixed to an upper end of the lower shaft. The lower end of the lower shaft engages the central top surface of the rotatable housing 41. In this way, the length of the upper shaft can be relatively short. This means the vessel cap 16 can be easily installed and removed from the vessel 2 without damaging the lower shaft.

Rotation of the rotatable housing 41 causes each ball housing (and thus each ball retained therein) to rotate about a central axis of the rotatable housing 41 - the balls are pushed laterally by their respective ball housings as they are rotated. As the rotatable housing 1 is rotated, the balls thus move from one aperture to the next adjacent aperture (depending on the direction of rotation). A user can thus select/determine which filter elements to seal (and which filter element to leave unsealed) by rotating the rotatable housing 41 via the handle 60. In this way, a single filter element can be cleaned (or flushed) with fluid at a time, which is selected by rotating the rotatable housing accordingly. The valve assembly 41 is thus also arranged to allow selection of which filter elements to seal and which filter element(s) to unseal.

To clean the vessel 2, the vessel 2 is flushed with water, which enters the vessel 2 via the vessel outlet 6. The water flows towards the valve assembly 40, which is initially positioned to seal five filter elements and leave one filter element unsealed. The valve assembly 40 directs the flow of water to the output of the filter element that is not sealed by the valve assembly 40. As described above, this is because, in this embodiment, the other outputs of the filter elements are sealed via the sealing balls, which prevent the flow of water from entering these filter elements. The water flows into the unsealed filter element, flushing the solids from its filter screen, which then flows towards the backflush outlet 3 as described above. After a suitable pre-determined period (for example, 2 minutes), the rotatable housing 41 is then rotated to select/unseal an adjacent output of a filter element, which is then flushed with water to remove its built up solids. This process is repeated for each filter element until each filter element has been flushed with water individually. In other words, once the vessel is connected to the flushing fluid, the valve assembly 41 is arranged to direct the flushing fluid to a single filter element by isolating/sealing the other filter elements from the flushing fluid.

Cleaning a filter comprising a plurality of filter elements using the above described method is advantageous (relative to cleaning a single conventional larger filter element) because, for a given flush water flowrate, the average flush water velocity through the filter is increased by a factor of 2.4 (if the filter comprises six filter elements). This is because a single filter element has approximately 0.4 times the flow area of a single conventional larger filter element. This significantly increases the cleaning efficiency of the filter 1 as a whole.

In some embodiments, the valve assembly may arranged to direct the flushing fluid to more than just one single filter element. For example, for a filter comprising six filter elements, the valve assembly may comprise four sealing balls (instead of five) such that two filter elements are left unsealed when cleaning/flushing the filter.

In some embodiments, the valve assembly 40 is arranged to seal the filter elements using an alternative suitable arrangement to that of the sealing balls for sealing the filter elements (i.e., comprises an alternative suitable one-way valve arrangement). In one such alternative embodiment, the plate member 48, sealing balls and rotatable housing 41 are replaced with a circular disc. The disc is mounted to the top surface of the inner mounting plate (seen in Figure 2). The disc has a single aperture proximate to an edge of the which coincides with single outlets of the filter elements when the disc is mounted to the top surface of the inner mounting plate 22a. The disc is rotatable relative to the inner mounting plate 22a via a shaft 158 in the same way as the rotatable housing 41. In this way, the disc can be rotated to select which filter elements to seal and which filter element to leave unsealed. In this embodiment, the disc is arranged to be axially moveable relative to the inner mounting plate 22a. In this way, the disc can be raised during filtration to allow fluid to flow into the valve assembly from the filter elements (and thus exit the vessel via the vessel output).

As illustrated in Figure 10b, an embodiment of the filter comprising a valve assembly 140 that is suitable for a vessel using the FITO flow direction for filtration will now be described. In this embodiment, the valve assembly 140 utilises the same disc arrangement as described above. The valve assembly 140 comprises a circular disc that is mounted to a bottom surface of the outer mounting plate 22b (seen in Figure 2). The disc has a single aperture proximate to an edge of the which coincides with single outlets of the filter elements when the disc is mounted to the bottom surface of the outer mounting plate 22b - the outlets of the filter elements are now deemed/defined as those at the bottom end of the filter elements (instead of the top end). The disc is rotatable relative to the outer mounting plate 22b via a shaft 158 in the same way as the rotatable housing 41. In this way, the disc can be rotated to select which filter elements to seal and which filter element to leave unsealed. In this embodiment, the disc may not be axially moveable relative to the outer mounting plate 22b. This is because fluid exits the filter via the top ends of the filter elements during filtration (see Figure 5b), so the disc is not required to be moved for filtration. Here, during a cleaning/backflushing operation, cleaning/flushing fluid initially flows into all of the filter elements from the vessel outlet (referenced by 106 in Figure 6b) - the vessel inlet (referenced by 104 in Figure 6b) is sealing during this operation. Only the filter element that does not have a sealed outlet is purged during this operation because fluid within this filter element is able to flow to the 'backflush' outlet (referenced by 103 in Figure 6b) via the filter elements unsealed outlet, along with purged debris from this filter element. The disc is then rotated to select another outlet to be left unsealed, and the cleaning operation is repeated. This is repeated until each filter element has been flushed.

Further statements of invention in numbered paragraphs are set out below. Where below "any preceding paragraph" is mentioned, this refers to the preceding numbered paragraphs in the section below.

Paragraph 1. A filter for mounting within a high-pressure filtration vessel such that a fluid stream passing through the vessel does so via the filter, the filter comprising:

a plurality of elongate filter elements,
wherein each filter element is generally cylindrical and comprises:

a filter screen; and
a support structure,
wherein a burst or collapse failure differential pressure Pf of a filter element is defined by:

$$P_F = 2 . Y_p . K \left[ \frac{\left( D_F / t \right) - 1}{\left( D_F / t \right)^2} \right]$$

whereby:

Yp is the minimum yield stress of the filter element;
K is the derating factor of the filter element;
t is the characteristic thickness of the filter element; and
Df is the diameter of the filter element,
wherein Yp, K, t and Df are selected to provide a Pf of between 1000 PSI and 2000 PSI.

Paragraph 2. The filter as in any preceding paragraph, wherein Yp, K, t and Df are selected to provide a Pf of between 1500 PSIG and 2000 PSIG.

Paragraph 3. The filter as in any preceding paragraph, wherein:

Yp is around 65 kpsi;
K is between 0.45 and 0.6; and
t is between 2 mm and 4 mm.

Paragraph 4. The filter as in paragraph 3, wherein:

K is 0.5; and
t is 2.5 mm.

Paragraph 5. The filter as in any preceding paragraph, wherein Df is between 25 mm and 100 mm.

Paragraph 6. The filter as in paragraph 4, wherein Df is 60 mm.

Paragraph 7. The filter as in any preceding paragraph, wherein the filter elements are arranged to be radially symmetrical.

Paragraph 8. The filter as in any preceding paragraphs, wherein the filter elements are fixed relative to one another.

Paragraph 9. The filter as in any preceding paragraph, wherein the filter elements are mounted within a cartridge structure, the cartridge structure being arranged to be received by and within the filtration vessel.

Paragraph 10. The filter as in paragraph 9, wherein each filter element is removably attached to the cartridge structure.

Paragraph 11. A filtration vessel comprising the filter as in any preceding paragraph.

Paragraph 12. A method of cleaning a high-pressure filtration vessel comprising a filter, whereby the filter is mounted within the vessel such that a fluid stream passing through the vessel for filtration does so via the filter, the filter having a plurality of filter elements, the method comprising the steps of:

a) sealing the outlet of at least some of the filter elements

b) flushing the unsealed filter elements with a flushing fluid

c) repeating steps a) and b) for each other filter elements that have not been flushed until each filter element has been flushed with flushing fluid.

Paragraph 13. The method as in paragraph 12, wherein:

in step a) the outlets of all filter elements except one filter element is sealed; and,

in step c), the steps a) and b) are repeated for each other filter element that has not been flushed until each filter element has been separately flushed with flushing fluid.

Paragraph 14. The method as in paragraphs 12 or 13, wherein the flushing fluid is different to the fluid stream passing through the vessel for filtration.

Paragraph 15. The method as in any of paragraphs 12 to 14, wherein the flushing fluid is water.

Paragraph 16. A valve arrangement for controlling the flow of a fluid stream to within the filter elements of a filter as in any of paragraphs 1 to 8, the valve arrangement comprising:

sealing means for sealing the outlet of at least one filter element against a flow of fluid entering said filter element via said outlet; and

selecting means arranged to actuate the sealing means to select which outlet(s) of the filter elements are sealed by the sealing means.

Paragraph 17. The valve arrangement as in paragraph 16, wherein the sealing means is further arranged to seal less than the total number of outlets of the filter elements.

Paragraph 18. The valve arrangement as in paragraph 17, wherein the sealing means is arranged to seal all of the outlets of the filter elements except for the outlet of one filter element.

Paragraph 19. The valve arrangement as in any of paragraphs 16 to 18, wherein the selecting means comprises a movable element that is arranged to move the sealing means to select which outlet(s) of the filter element(s) are sealed.

Paragraph 20. The valve arrangement as in paragraph 19, wherein the sealing means is a plurality of balls retained with a rotatable housing such that each ball is retained proximate to the outlet of a filter element to seal the outlet from a flow of fluid into the filter element via the outlet, the number of balls being less than the number of outlets of the filter elements such that at least one outlet of a filter element is always unsealed; and

wherein the selecting means is a rotatable shaft arranged to engage the housing such that rotation of the shaft causes rotation of the housing, whereby rotation of the housing causes the balls to move laterally to seal the outlets of adjacent filter elements.

Paragraph 21. The valve arrangement as in paragraph 19, wherein the sealing means is a rotatable disc having an aperture that axially coincides with the output of a filter element; and

wherein the selecting means is a rotatable shaft arranged to engage the disc such that rotation of the shaft causes rotation of the disc, whereby rotation of the disc causes the aperture to move laterally to coincide with the output of an adjacent filter element.

Paragraph 22. A valve arrangement for controlling the flow of a fluid stream to outside the filter elements of a filter as in any of paragraphs 1 to 8, the valve arrangement comprising:

sealing means for sealing the outlet of at least one filter element against a flow of fluid exiting said filter element via said outlet; and

selecting means arranged to actuate the sealing means to select which outlet(s) of the filter elements are sealed by the sealing means.

Paragraph 23. The valve arrangement as in paragraph 22, wherein the sealing means is a rotatable disc having an aperture that axially coincides with the output of a filter element; and

wherein the selecting means is a rotatable shaft arranged to engage the disc such that rotation of the shaft causes rotation of the disc, whereby rotation of the disc causes the aperture to move laterally to coincide with the output of an adjacent filter element.

[end of description]

**Claims**

1. A filter for mounting within a high-pressure filtration vessel such that a fluid stream passing through the vessel does so via the filter, the filter comprising:

a plurality of elongate filter elements, wherein each filter element is generally cylindrical and comprises:

a filter screen; and
a support structure,
wherein a burst or collapse failure differential pressure Pf of a filter element is defined by:

$$P_F = 2.Y_p.K\left[\frac{\left(D_F/t\right) - 1}{\left(D_F/t\right)^2}\right]$$

whereby:

Yp is the minimum yield stress of the filter element;
K is the derating factor of the filter element;
t is the characteristic thickness of the filter element; and
Df is the diameter of the filter element, wherein Yp, K, t and Df are selected to provide a Pf of between 1000 PSI and 2000 PSI.

2. The filter as claimed in any preceding claim, wherein Yp, K, t and Df are selected to provide a Pf of between 1500 PSIG and 2000 PSIG.

3. The filter as claimed in any preceding claim, wherein:

Yp is around 65 kpsi;
K is between 0.45 and 0.6; and
t is between 2 mm and 4 mm.

4. The filter as claimed in claim 3, wherein:

K is 0.5; and
t is 2.5 mm; and/or
wherein Df is between 25 mm and 100 mm, preferably 60 mm.

5. The filter as claimed in any preceding claim, wherein the filter elements are arranged to be radially symmetrical; and/or

wherein the filter elements are fixed relative to one another; and/or
wherein the filter elements are mounted within a cartridge structure, the cartridge structure being arranged to be received by and within the filtration vessel.

6. The filter as claimed in claim 5, wherein each filter element is removably attached to the cartridge structure.

7. A filtration vessel comprising the filter as claimed in any preceding claim.

8. A valve arrangement for controlling the flow of a fluid stream to within the filter elements of a filter as claimed in any of claims 1 to 7, the valve arrangement comprising:

sealing means for sealing the outlet of at least one filter element against a flow of fluid entering said filter element via said outlet; and
selecting means arranged to actuate the sealing means to select which outlet(s) of the filter elements are sealed by the sealing means.

9. The valve arrangement as claimed in claim 8, wherein the sealing means is further arranged to seal less than the total number of outlets of the filter elements.

10. The valve arrangement as claimed in claim 9, wherein the sealing means is arranged to seal all of the outlets of the filter elements except for the outlet of one filter element.

11. The valve arrangement as claimed in any of claims 8 to 10, wherein the selecting means comprises a movable element that is arranged to move the sealing means to select which outlet(s) of the filter element(s) are sealed.

12. The valve arrangement as claimed in claim 11, wherein the sealing means is a plurality of balls retained with a rotatable housing such that each ball is retained proximate to the outlet of a filter element to seal the outlet from a flow of fluid into the filter element via the outlet, the number of balls being less than the number of outlets of the filter elements such that at least one outlet of a filter element is always unsealed; and
wherein the selecting means is a rotatable shaft arranged to engage the housing such that rotation of the shaft causes rotation of the housing, whereby rotation of the housing causes the balls to move laterally to seal the outlets of adjacent filter elements.

13. The valve arrangement as claimed in claim 11, wherein the sealing means is a rotatable disc having an aperture that axially coincides with the output of a filter element; and
wherein the selecting means is a rotatable shaft arranged to engage the disc such that rotation of the shaft causes rotation of the disc, whereby rotation of the disc causes the aperture to move laterally to coincide with the output of an adjacent filter element.

14. A valve arrangement for controlling the flow of a fluid stream to outside the filter elements of a filter as claimed in any of claims 1 to 8, the valve arrangement comprising:

sealing means for sealing the outlet of at least one filter element against a flow of fluid exiting said filter element via said outlet; and
selecting means arranged to actuate the sealing means to select which outlet(s) of the filter elements are sealed by the sealing means.

15. The valve arrangement as claimed in claim 14, wherein the sealing means is a rotatable disc having an aperture that axially coincides with the output of a filter element; and

wherein the selecting means is a rotatable shaft arranged to engage the disc such that rotation of the shaft causes rotation of the disc, whereby rotation of the disc causes the aperture to move laterally to coincide with the output of an adjacent filter element.

FIG. 1

FIG. 2

18

20

26

22a

22b

FIG. 3

FIG. 4

FIG. 5a

FIG. 5b

FIG. 6a

FIG. 6b

FIG. 7

FIG. 8

FIG. 9

58

40

A ← | A

SECTION A - A

**FIG. 10a**

158

B ↑ | B ↑

140

SECTION B - B

**FIG. 10b**